# EUROPEAN PATENT SPECIFICATION

(11) **EP 0 533 349 B1**
(45) Date of publication and mention of the grant of the patent: **17.04.1996**
(21) Application number: 92307456.1
(22) Date of filing: 14.08.1992
(51) Int. Cl.: B01D 33/067, B01D 29/44

(54) **Separator screen**
Trennsieb
Tamis séparateur

(30) Priority: 16.08.1991 JP 72444/91 U
(43) Date of publication of application: 24.03.1993
(73) Proprietor: NAGAOKA INTERNATIONAL CORPORATION, Minami Kawachi-gun, Osaka-fu (JP)
(72) Inventor: Nagaoka, Tadayoshi, c/o Nagaoka Int. Corp., Kawachi-gun, Osaka-fu (JP)
(74) Representative: Woodward, John Calvin

(56) References cited:
- DE-U- 9 108 129
- GB-A- 770 980

## Description

This invention relates to a screen suitable for separating a mixture of liquid and solid materials into its liquid and solid components.

In the paper manufacturing industry, a profeed washer is used for washing pulp mat which is the raw material from which the paper is made. A conventional profeed washer normally includes wire-netting mounted on the circumferential surface of a hollow rotary drum. Liquid raw material for the paper including pulp is supplied over this rotary drum and washed. After washing, the liquid in the raw material falls to the inside of the rotary drum, passing through the wire-netting and is collected from the inside of the rotary drum whereas pulp fiber is trapped by the wire-netting and is moved by the rotation of the rotary drum and is collected at a pulp collecting station.

In the conventional profeed washer just described, fiber in the raw material is trapped by the wire-netting and smoothly collected. The wire-netting, however, has the disadvantage that the diameter of the metal wire constituting the wire-netting is relatively small so the wire-netting is vulnerable to corrosion and wear which reduces its durability. This poses a serious problem in conventional profeed washers of this type.

Machines and equipment other than profeed washers using a moving body such as a rotary drum provided with wire-netting for separating the mixture of solid and liquid into its solid and liquid components are also faced with the same problem of lack of durability of the wire-netting.

In this connection it is also worth mentioning that DE-U-9 108 129 teaches a separator screen comprising a plurality of screen wires. Each screen wire, however, has a continuous formation, on the facial surface, longitudinally along the entire length of the wire, to improve the collection capacity of the screen.

It is an object of the invention therefore to overcome or substantially reduce the above described problems in a machine or equipment using a moving body provided with wire-netting for separating solid material from liquid by providing a novel element which can collect the solid material effectively and yet has sufficient durability.

According to the invention, there is provided a separator screen comprising a plurality of screen wires characterised in that each of said screen wires has projections (5) and/or depressions (7) preformed on the upper or facial surface thereof at predetermined intervals along its length.

Preferably, the screen comprises a plurality of screen wires each of which is formed on the facial surface thereof with a plurality of projections and/or depressions at predetermined intervals. The screen may be further formed on the side surfaces thereof with a plurality of projections at predetermined intervals.

A screen made of a plurality of wedge shaped wires arranged in parallel with a space of a predetermined width defined between respective adjacent screen wires is well known. This type of screen generally has screen wires of a much larger diameter than wire-netting and hence is much more durable. As a result of tests using such a wire screen instead of wire-netting on a rotary drum, however, it was found that the facial surface (i.e. the surface which comes into contact with the raw material from which the paper is made when used in a profeed washer) of the screen wire of the wire screen was so flat and smooth that, when the wire screen was mounted on the rotary drum, a substantial portion of the solid material including pulp fiber supplied onto a rising screen portion of tee rotating rotary drum was not trapped on the facial surface of the screen wires but instead slipped down along the surface of the screen. As a result, it was found that the ratio of collection of solid material at a solid material collecting station was very poor compared with using conventional wire-netting on the rotary drum.

In accordance with the present invention, projections and/or depressions are formed at appropriate intervals on the facial surface of each screen wire constituting the screen and it has been found that these projections and/or depressions surprisingly function to trap solid material such as fibers in the raw material from which the paper is made sufficiently and thereby enable the solid material to be moved with the movement of a moving body (such as a rotary drum) to a predetermined solid collecting station as effectively as wire-netting. Thus, the present invention provides a novel separator screen for use, for example, with a profeed washer or like device having a solid material trapping ability which is as high as wire-netting and much more durable.

It should be noted that the screen of the invention is suitable for use not only with a rotary body such as a profeed washer but also with stationary type screens and filters such as a well screen in which the screen has to trap gravel filled in the well bore effectively on the screen surface.

Preferred embodiments of the invention will now be described by way of example only, with reference to the accompanying drawings, in which:
Figure 1 is a perspective view of one embodiment of screen according to the invention;
Figure 2 is a perspective view of a method for forming projections on the screen of Figure 1;
Figure 3 is a perspective view of a second embodiment of screen according to the invention;
Figure 4 is a perspective view of a method for forming depressions in the screen of Figure 3;
Figure 5 is a plan view of a third embodiment of the screen according to the invention; and
Figure 6 is a perspective view showing the rotary of a profeed washer fitted with a screen of the invention.

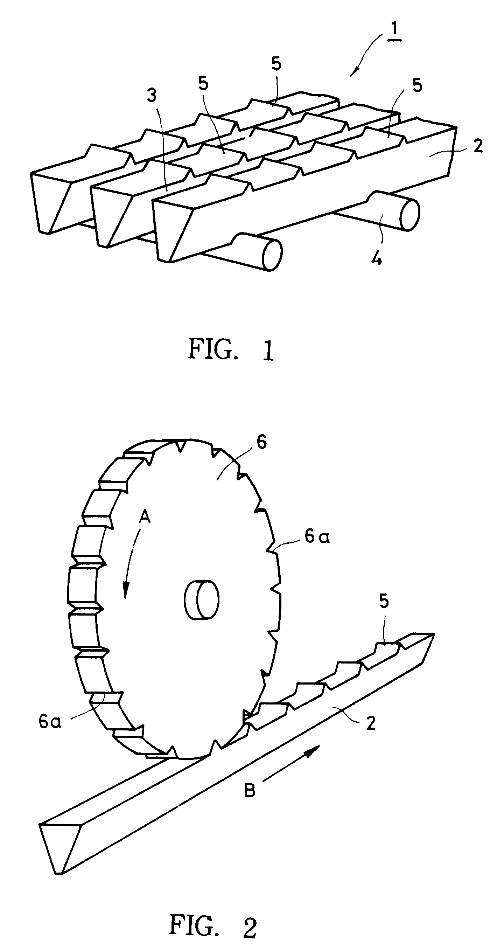

Figure 1 is a perspective view showing a first embodiment of the invention. A screen 1 includes a plurality of screen wires 2 which are substantially wedge shaped in cross section and arranged in parallel with slits or spaces 3 formed between respective adjacent screen wires 2. Support rods 4 are welded to the screen wires 2 which extend transversely relative thereto.

Projections 5 are formed in the upper or facial surface of the respective screen wires 2 at predetermined intervals, said projections extending laterally across the screen wires 2. These projections 5 can be formed, for example, as shown in Figure 2 by rotating in the direction of arrow A, a shape forming wheel 6 which has depressions 6a conforming to the shape of the projections 5 formed around the periphery thereof at the same intervals as that between the projections 5 and feeding the screen wire 2 in the direction of arrow B to cause the screen wire 2 to mesh with the shape forming wheel 6.

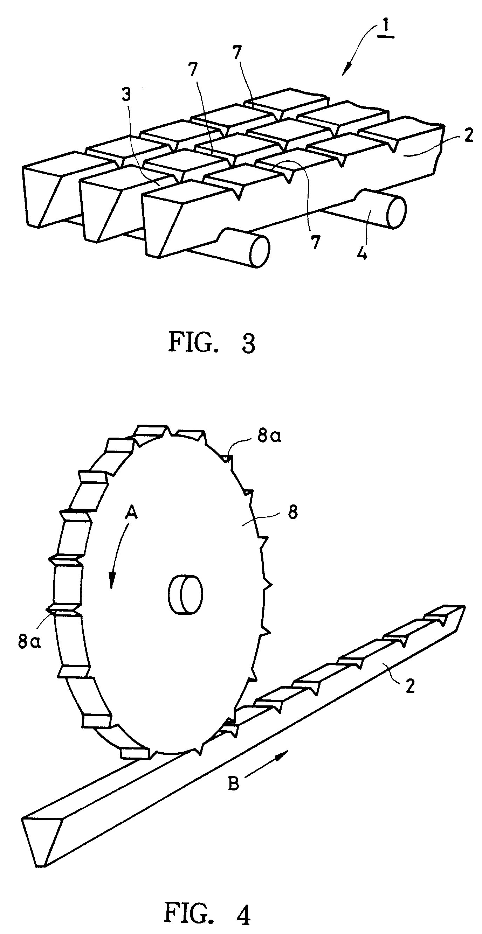

Figure 3 is a perspective view showing another embodiment of the invention in which a screen 1 includes, as in the embodiment of Figure 1 a plurality of screen wires 2 arranged in parallel with slits or spaces 3 defined between respective adjacent screen wires 2 and support rods 4 to which the screen wires 2 are welded. The screen 1 of this embodiment however differs from the screen 1 of Figure 1 in that, the projections 5 are replaced with depressions 7 extending laterally across the screen wire 2 and formed on the facial surface of each screen wire 2 at a predetermined interval. These depressions 7 can be formed as shown in Figure 4, for example, by rotating in the direction of arrow A, a shape forming wheel 8 which has projections 8a conforming to the shape of the depressions 7 formed around the periphery thereof at the same intervals as that between the depressions 7 and feeding the screen wire 2 in the direction of arrow B to cause the screen wire 2 to mesh with the shape forming wheel 8.

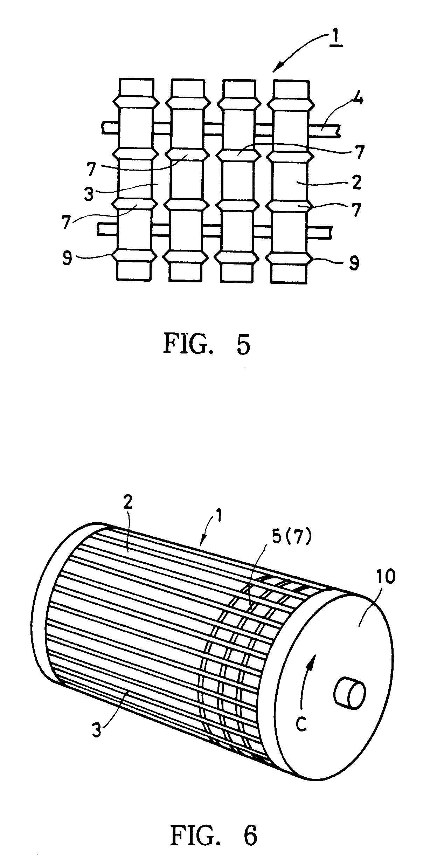

Figure 5 is a plan view showing another embodiment of the invention in which each screen wire 2 of the screen is formed on the facial surface thereof with depressions 7 in the same manner as in the embodiment of Figure 3 and is additionally formed on the side surface thereof with bulging portions 9 which are formed by bulging out the material of the screen wire 2 on the sides of each depression 7 when the shape forming wheel 8 is in meshing engagement with the screen wire 2. Since these bulging portions 9 project into the spaces 3, a particle of solid material such as fiber which has entered the spaces 3 will be caught by the bulging portions 9 and, as a result, the ratio or capability of trapping solid by the screen is increased.

Figure 6 shows a profeed washer to which a screen 2 of the invention is fitted on the circumferential portion of rotary drum 10. As this rotary drum 10 is rotated in the direction of arrow C and raw material (not shown) for the paper to be made is supplied over the upper portion of the rotary drum 10, the liquid portion of the raw material will fall through the spaces 3 of the screen 1 to the inside of the rotary drum 10 whereas the fiber portion of the raw material will be trapped by the projections 5 or depressions 7 (only a portion thereof is shown in Figure 6) formed on the facial surface of the screen wires 2 and, as the rotary drum 10 is rotated, said trapped fibers will be carried to a predetermined fiber collecting station (not shown) and collected therein.

In the illustrated embodiments, the projections 5 and depressions 7 are substantially triangular in cross section. The cross section of the projections 5 and the depressions 7 is not limited to this but it may be of one of other shapes such as semi-circular or square cross sections. The projections 5 and depressions 7 may extend obliquely of the screen wire 2 instead of at 90° thereto as illustrated. Furthermore, the projections 5 and depressions 7 may be formed in a lateral direction over only part of the width of the screen wire 2 instead of being formed over the entire width thereof as illustrated.

In the illustrated embodiments, the projections 5 and the depressions 7 of the screen wires 2 are aligned laterally for all of the screen wires 2. Alternatively, the projections 5 and the depressions 7 may be disposed in a staggered arrangement in the lateral direction of the screen wire 2.

The shape of the screen wires 2 can be of any desired cross section such as wedge shaped, circular, square, rhombic, hexagonal etc.

## Claims

1. A separator screen comprising a plurality of screen wires (2) characterised in that each of said screen wires has projections (5) and/or depressions (7) preformed on the upper or facial surface thereof at predetermined intervals along its length.

2. A separator screen as claimed in claim 1 characterised in that a plurality of projections (5) and depressions (7) are preformed on the upper or facial surface of each screen wire at predetermined intervals along its length.

3. A separator screen as claimed in claim 1 or claim 2 characterised in that each screen wire (2) is provided on its side surfaces with a plurality of preformed projections (9).

4. A separator as claimed in any preceding claim characterised in that the screen wires are mounted on support rods (4).

5. A separator as claimed in claim 4 characterised in that the screen wires are welded to the support rods (4).

## Patentansprüche

1. Trennsieb mit einer Mehrzahl von Siebdrähten (2), dadurch gekennzeichnet, daß jeder der Siebdrähte Erhebungen (5) und/oder Vertiefungen (7) aufweist, die an der oberen oder Stirnfläche in vorgegebenen Abständen entlang seiner Länge vorgeformt sind.

2. Trennsieb nach Anspruch 1, dadurch gekennzeichnet, daß eine Mehrzahl von Erhebungen (5) und Vertiefungen (7) an der oberen oder Stirnfläche jedes Siebdrahtes in vorgegebenen Abständen entlang seiner Länge vorgeformt sind.

3. Trennsieb nach Anspruch 1 oder Anspruch 2, dadurch gekennzeichnet, daß jeder Siebdraht (2) an seinen seitlichen Oberflächen mit einer Mehrzahl von vorgeformten Erhebungen (9) versehen ist.

4. Trenner nach einem der vorangehenden Ansprüche, dadurch gekennzeichnet, daß die Siebdrähte an Tragstangen (4) befestigt sind.

5. Trenner nach Anspruch 4, dadurch gekennzeichnet, daß die Siebdrähte an die Tragstangen (4) angeschweißt sind.

## Revendications

1. Crible de séparation comprenant une pluralité de fils 2 de crible caractérisé en ce que chacun desdits fils 2 comporte des protubérances 5 et/ou des dépressions 7 préformées sur la surface supérieure ou faciale de celui-ci à des intervalles prédéterminés sur sa longueur.

2. Crible de séparation selon la revendication 1, caractérisé en ce qu'une pluralité de protubérances 5 et de dépressions 7 sont préformées sur la surface supérieure ou faciale de chaque fil du crible à des intervalles prédéterminés sur sa longueur.

3. Crible de séparation selon l'une des revendications 1 ou 2, caractérisé en ce que chaque fil 2 du crible est doté sur ses surfaces latérales d'une pluralité de saillies 9 préformées.

4. Séparateur selon l'une des revendications précédentes, caractérisé en ce que les fils du crible sont montés sur des tiges supports 4.

5. Séparateur selon la revendication 4, caractérisé en ce que les fils du crible sont soudés sur les tiges supports 4.
